# EUROPEAN PATENT APPLICATION

(11) **EP 3 683 934 A1**
(43) Date of publication of application: **22.07.2020**
(21) Application number: 20151374.4
(22) Date of filing: 13.01.2020
(51) Int. Cl.: H02K 3/28, H02K 11/20, H02P 25/18, H02P 7/00, H02P 9/00

(54) **WINDINGS INTERCONNECTION DEVICE**

(30) Priority: 16.01.2019 ES 201930073 U
(71) Applicant: Grupos Electrogenos Europa, S.A., 50450 Muel (Zaragoza) (ES)
(72) Inventor: Santa Bárbara Recio, José María, 50450 Muel (ES); Calavia Calvo, Daniel, 50450 Muel (ES); Santos Chueca, José María, 50450 Muel (ES)
(74) Representative: Schäfer, Matthias W.

(57) **Abstract**

A windings interconnection device of the type used in electric generators is provided to modify the characteristics of the electrical energy produced, wherein it comprises a plurality of solid-state electronic switches (1, 2, 3, 4, 5, 6, 7, 8, 9, 10, 11, 12, 13, 14, 15), located mechanically attached on a heat sink (22) and electrically connected to the ends of the separate windings (16, 17, 18, 19, 20, 21) of the electric generator, that can open or close selectively to generate different interconnection configurations of the said windings, the opening or closing of these solid-state electronic switches (1, 2, 3, 4, 5, 6, 7, 8, 9, 10, 11, 12, 13, 14, 15) being controlled individually, by means of a bus of separate control lines (23), from a control unit (24). The windings interconnection device presented affords numerous advantages over currently available equipment, the most important being that it enables conventionally-used mechanical switches to be replaced by integrated electronics, which operate more reliably, prolonging the service life of the generator and notably reducing the maintenance required.

## Description

This description refers, as its title indicates, to a device for the interconnection of windings of the type used in electric generators, especially generator sets, to modify the characteristics of the electrical energy produced or to adapt their operation to consumption needs.

### Field of the invention

The invention relates to the field of winding switching devices for electric generators, especially generator sets.

### Current State of the Art

Commonly in electric generators the windings need to be interconnected in different ways to obtain different voltage, current and power characteristics depending on the requirements. For this purpose mechanical-type, multi-contact electrical switches are often used, known as "cam switches", that are operated manually. This is described, for example, in patents ES0164038 "*Rotary wye delta switching apparatus*", ES0156499 "*Wye delta switch with no-voltage device*" or ES0245831 "*Improvements in changeover switches for regulating no-load voltage and winding switching in transformers*". However these devices present operating problems due to the wear of the electro-mechanical contacts, making them elements that are prone to failures and with a limited service life. Furthermore, they are manually-operated devices making them susceptible to human errors that may cause them to be accidentally activated while the generator is in operation, which could lead to breakdowns in the generator or in the powered equipment. In addition, with these manual electro-mechanical devices it is very complicated to obtain different wye and delta winding combinations that could optimise the operation of the electric generator. Another drawback of these devices is their high economic cost.

Some attempts have been made to improve this, as described, for example, in ES1028685 "*Control device for electric motor start up*", but in this case, electro-mechanical components such as relays are still used, and it is also an application that is solely for electric motors, not for generators. In addition, WO2013152910 "*Control transformer*" describes the switching of windings for transformers using electro-mechanical relays that continues to present the aforementioned mechanical switching problems and, what is more, it is not directly applicable to electric generators.

### Description of the invention

To resolve the current problems that exist with the switching of windings in electric generators, the windings interconnection device that is the object of this invention has been envisaged, comprising a plurality of solid-state electronic switches, located mechanically attached on a heat sink and electrically connected to the ends of the separate windings of the electric generator in such a way that, by means of their selective opening or closing, different interconnection configurations of the said windings are generated, the opening or closing of these solid state electronic switches being controlled from a control unit that ensures that the changing of the solid state electronic switches from an open to closed state is carried out only when the electric generator is at a standstill.

This device allows, at least, wye (Y), delta (D), parallel-wye (Y/Y) and zigzag (ZZ) configurations of the separate windings of the electric generator to be obtained, depending on the combination of solid-state electronic switches that are closed or open.

### Advantages of the invention

The windings interconnection device presented affords numerous advantages over currently available equipment, the most important being that it enables conventionally-used mechanical switches to be replaced by integrated electronics, which operate more reliably, prolonging the service life of the generator and notably reducing the maintenance required.

Furthermore, it is important to highlight the considerable cost reduction obtained by eliminating conventional mechanical switches.

Another important advantage is that it is not necessary to actuate a mechanical manual selector. This is carried out by means of a control signal, which prevents the configuration being changed when the generator is in operation, resulting in a notable increase in operating safety.

Another advantage of this invention is the possibility of automatic interconnection since the control module can determine the most suitable connection without the intervention of the operator.

Another of the most important advantages to be noted is that a considerable reduction in size is achieved.

Furthermore, an additional advantage is the increase in switching power compared to conventional mechanical switching devices.

### Description of the figures

To gain a better understanding of the object of this invention, a preferred practical embodiment of a windings interconnection device is shown in the drawing attached.
In the said drawing, figure -1- shows a connection diagram in an example with 6 windings, with all of the solid-state electronic switches open.
Figure -2- shows the simplified connection diagram, in an example with 6 windings, without the control elements and connections, obtaining a wye (Y) connection.
Figure -3- shows the simplified connection diagram, in an example with 6 windings, without the control elements and connections, obtaining a delta (D) connection.
Figure -4- shows the simplified connection diagram, in an example with 6 windings, without the control elements and connections, obtaining a parallel-wye (Y//Y) connection.
Figure -5- shows the simplified connection diagram, in an example with 6 windings, without the control elements and connections, obtaining a zigzag (ZZ) connection.

### Preferred embodiment of the invention

The conformation and characteristics of the invention can be better understood in the following description that relates to the attached figures.

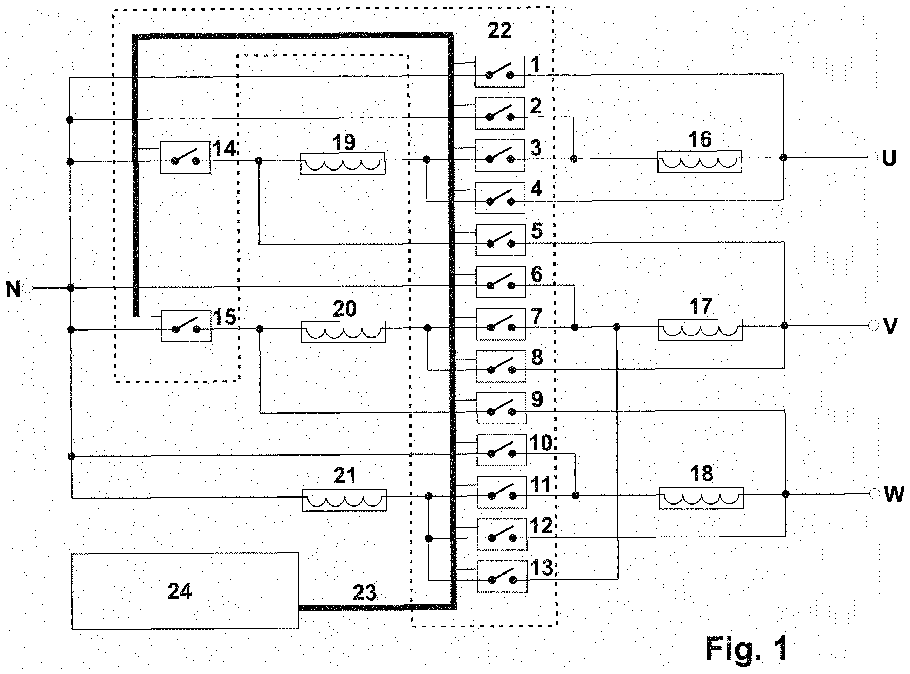

As can be seen in figure 1, the windings interconnection device is shown, comprising a plurality of solid-state electronic switches (1, 2, 3, 4, 5, 6, 7, 8, 9, 10, 11, 12, 13, 14, 15), located mechanically attached on a heat sink (22) and electrically connected to the ends of the separate windings (16, 17, 18, 19, 20, 21) of the electric generator, in such a way that by their selective opening or closing, different interconnection configurations of the said windings are generated, with the opening or closing of these solid-state electronic switches (1, 2, 3, 4, 5, 6, 7, 8, 9, 10, 11, 12, 13, 14, 15) being controlled individually by means of a bus of separate control lines (23) from a control unit (24). This control unit (24) can be the same control unit of the whole of the electric generator, or a separate one.

The solid-state electronic switches can be thyristors, triacs, IGBTs, solid-state relays, etc... or any circuit based on them.

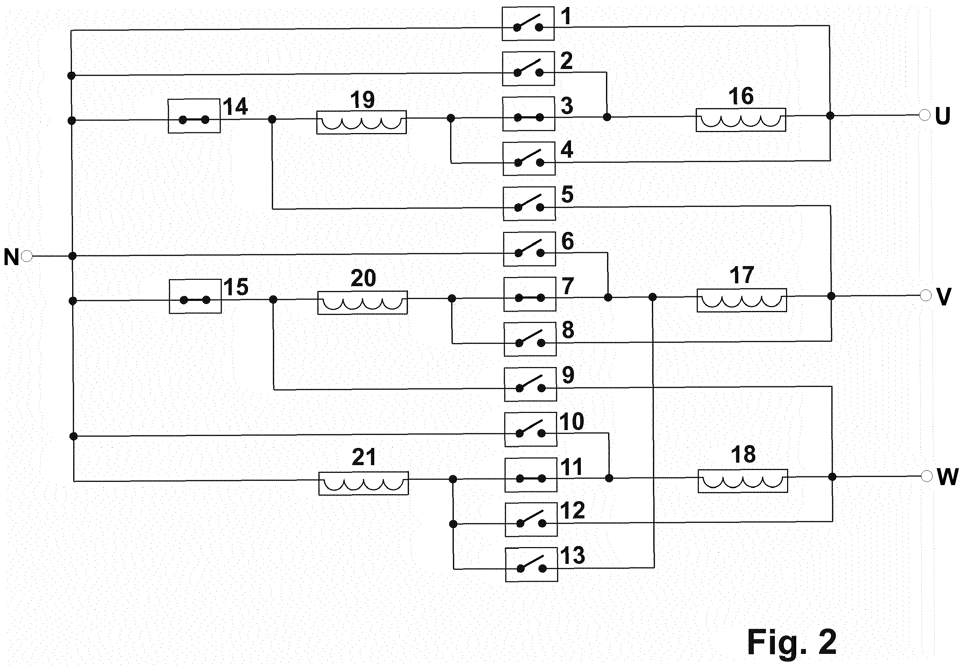

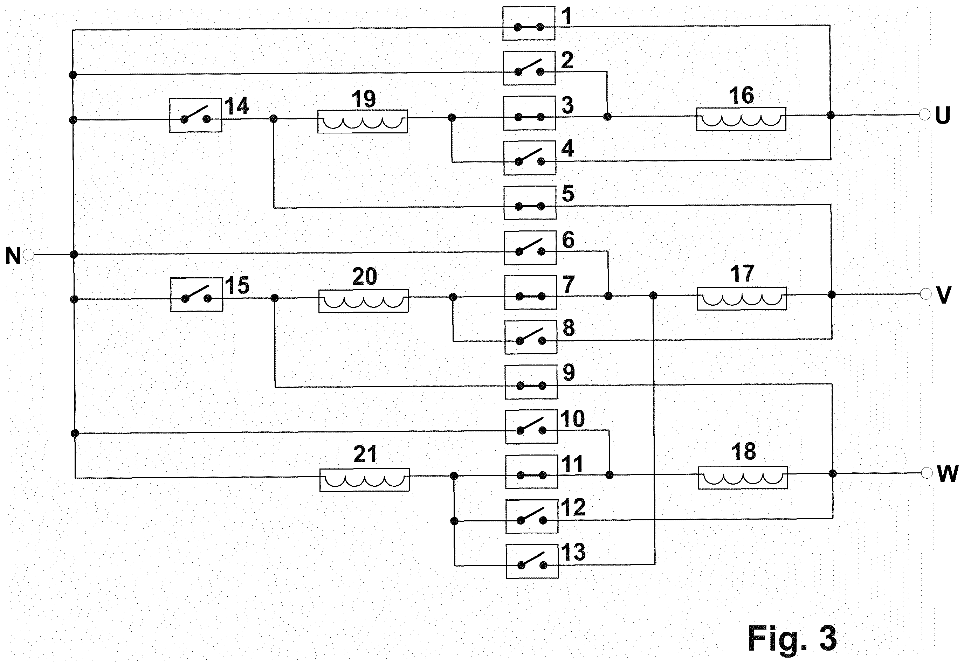

In the example shown in figures 1, 2, 3 4 and 5 a preferred embodiment is illustrated in which the number of separate windings (16, 17, 18, 19, 20, 21) is 6, and the number of solid-state electronic switches (1, 2, 3, 4, 5, 6, 7, 8, 9, 10, 11, 12, 13, 14, 15) is 15, corresponding to an electric generator in which electric power with three phases (U, V, W) plus neutral (N) is obtained. This invention can be easily extrapolated to any different number of windings, such as for example 3, 9, 12 etc.

The change in the state of the solid-state electronic switches (1, 2, 3, 4, 5, 6, 7, 8, 9, 10, 11, 12, 13, 14, 15) from open to closed, and consequently the change in the configuration of the electric generator is carried out with the electric generator at a standstill.

The control unit (24) carries out the selective activation, by means of the bus of separate control lines (23), of the solid-state electronic switches (1, 2, 3, 4, 5, 6, 7, 8, 9, 10, 11, 12, 13, 14, 15) to obtain the required configuration as shown in Table 1, where "X" indicates the solid-state electronic switches that close in each case:

**Table 1**

| **Configuration** | **Closed solid-state electronic switch** | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| Wye (Y) | | | X | | | | X | | | | X | | | X | X |
| Delta (D) | X | | X | | X | | X | | X | | X | | | | |
| Parallel-wye (Y//Y) | | X | | X | | X | | X | | X | | X | | X | X |
| Zigzag (ZZ) | | X | | X | | | | X | X | X | | | X | X | |

Figure 2 shows the wye (Y) configuration of the separate windings (16, 17, 18, 19, 20, 21) of the electric generator when the solid-state electronic switches (3, 7, 11, 14, 15) are closed, the rest remaining open.

Figure 3 shows the delta (D) configuration of the separate windings (16, 17, 18, 19, 20, 21) of the electric generator when the solid-state electronic switches (1, 3, 5, 7, 9, 11) are closed, the rest remaining open.

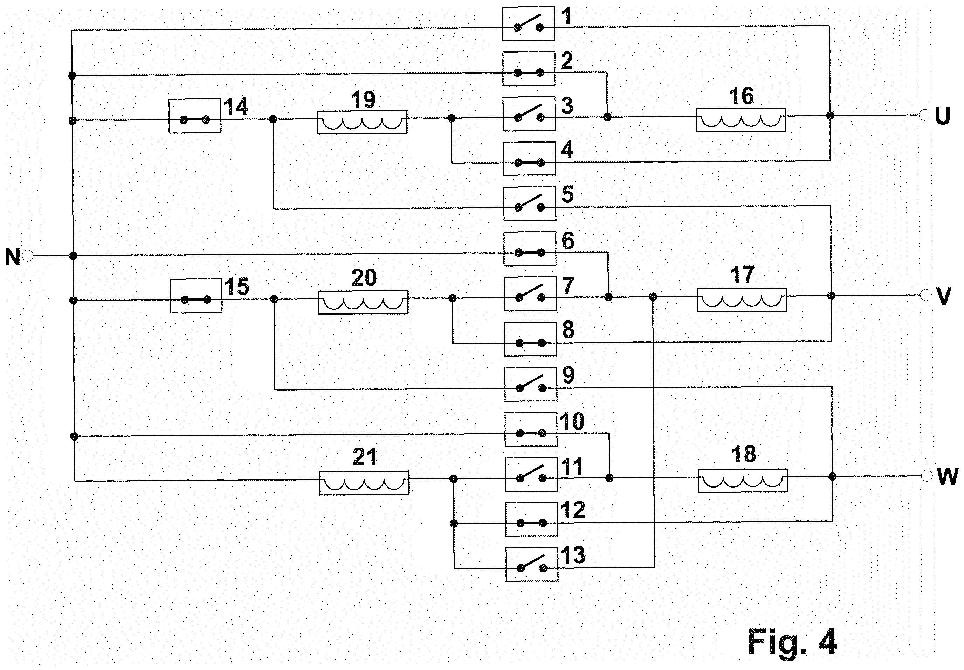

Figure 4 shows the parallel-wye (Y) configuration of the separate windings (16, 17, 18, 19, 20, 21) of the electric generator when the solid-state electronic switches (2, 4, 6, 8, 10, 12, 14, 15) are closed, the rest remaining open.

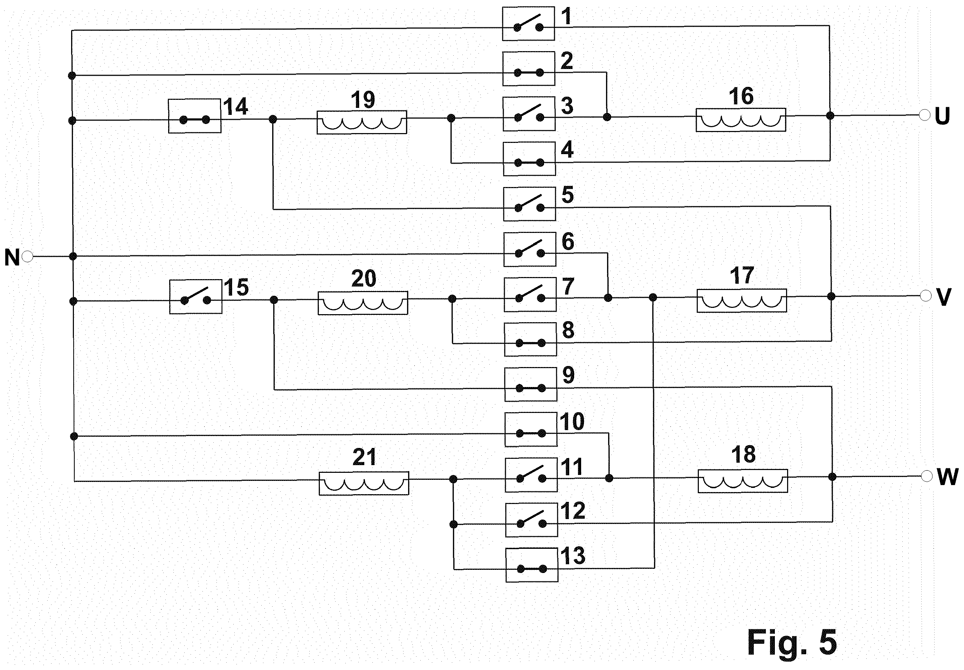

Figure 5 shows the zigzag (ZZ) configuration of the separate windings (16, 17, 18, 19, 20, 21) of the electric generator when the solid-state electronic switches (2, 4, 8, 9, 10, 13, 14) are closed, the rest remaining open.

A technical expert will easily understand that the characteristics of different embodiments can be combined with the characteristics of other possible embodiments provided that the combination is technically possible.

All of the information referring to examples or embodiments forms part of the description of the invention

## Claims

1. Windings interconnection device of the type used in electric generators to modify the characteristics of the electrical energy produced, **characterised in that** it comprises a plurality of solid-state electronic switches (1, 2, 3, 4, 5, 6, 7, 8, 9, 10, 11, 12, 13, 14, 15), located mechanically attached on a heat sink (22) and electrically connected to the ends of the separate windings (16, 17, 18, 19, 20, 21) of the electric generator, that can open or close selectively to generate different interconnection configurations of the said windings, the opening or closing of these solid-state electronic switches (1, 2, 3, 4, 5, 6, 7, 8, 9, 10, 11, 12, 13, 14, 15) being controlled individually, by means of a bus of separate control lines (23), from a control unit (24).

2. Windings interconnection device, according to the preceding claim, **wherein** the number of separate windings (16, 17, 18, 19, 20, 21) is 6 and the number of solid-state electronic switches (1, 2, 3, 4, 5, 6, 7, 8, 9, 10, 11, 12, 13, 14, 15) is 15.

3. Windings interconnection device, according to either of the previous claims, **wherein** the separate windings (16, 17, 18, 19, 20, 21) of the electric generator have a wye (Y) configuration when the solid-state electronic switches (3, 7, 11, 14, 15) are closed, the rest remaining open.

4. Windings interconnection device, according to either of the previous claims 1 and 2, **wherein** the separate windings (16, 17, 18, 19, 20, 21) of the electric generator have a delta (D) configuration when the solid-state electronic switches (1, 3, 5, 7, 9, 11) are closed, the rest remaining open.

5. Windings interconnection device, according to either of the previous claims 1 and 2, **wherein** the separate windings (16, 17, 18, 19, 20, 21) of the electric generator have a parallel-wye (Y//Y) configuration when the solid-state electronic switches (2, 4, 6, 8, 10, 12, 14, 15) are closed, the rest remaining open.

6. Windings interconnection device, according to either of the previous claims 1 and 2, **wherein** the separate windings (16, 17, 18, 19, 20, 21) of the electric generator have a zigzag (ZZ) configuration when the solid-state electronic switches (2,4, 8, 9, 10, 13, 14) are closed, the rest remaining open.
